# NEW EUROPEAN PATENT SPECIFICATION

(11) **EP 2 405 764 B2**
(45) Date of publication and mention of the opposition decision: **27.07.2022**
(45) Mention of the grant of the patent: 03.10.2018
(21) Application number: 10708771.0
(22) Date of filing: 15.03.2010
(51) Int. Cl.: A23C 9/12, A23C 9/123

(54) **METHOD FOR PRODUCING AN ACIDIFIED MILK PRODUCT**
VERFAHREN ZUR HERSTELLUNG EINES SAUERMILCHPRODUKTS
PROCÉDÉ DE FABRICATION D'UN PRODUIT LAITIER ACIDIFIÉ

(30) Priority: 13.03.2009 DK 200900346
(43) Date of publication of application: 18.01.2012
(73) Proprietor: Chr. Hansen A/S, 2970 Hoersholm (DK)
(72) Inventor: FAERGEMAND, Merete, DK-3450 Alleroed (DK); GILLELADEN, Christian, DK-1674 Copenhagen V (DK); QVIST, Karsten Bruun, DK-1814 Frederiksberg C (DK)
(74) Representative: Uexküll & Stolberg
(86) International application number: PCT/EP2010/053282
(87) International publication number: WO 2010/103126

(56) References cited:
- EP-A1- 0 610 649
- EP-A1- 2 011 402
- WO-A1-2007/060288
- WO-A2-2009/016257
- AMATAYAKUL T ET AL: "Physical characteristics of yoghurts made using exopolysaccharide-producing starter cultures and varying casein to whey protein ratios" January 2006 (2006-01), INTERNATIONAL DAIRY JOURNAL, VOL. 16, NR. 1, PAGE(S) 40-51 , XP002580679 ISSN: 0958-6946 table 4
- LAUBER S ET AL: "RELATIONSHIP BETWEEN THE CROSSLINKING OF CASEINS BY TRANSGLUTAMINASE AND THE GEL STRENGTH OF YOGHURT" ZEITSCHRIFT FUER LEBENSMITTEL-UNTERSUCHUNG UND -FORSCHUNG. A,EUROPEAN FOOD RESEARCH AND TECHNOLOGY, SPRINGER, HEIDELBERG, DE, vol. 210, no. 5, 1 January 2000 (2000-01-01), pages 305-309, XP001133823 ISSN: 1431-4630
- BONISCH ET AL: "Yoghurt gel formation by means of enzymatic protein cross-linking during microbial fermentation" FOOD HYDROCOLLOIDS, ELSEVIER LNKD- DOI:10.1016/J.FOODHYD.2006.07.002, vol. 21, no. 4, 16 January 2007 (2007-01-16), pages 585-595, XP005736325 ISSN: 0268-005X
- FAERGEMAND M ET AL: "Transglutaminase: effect on instrumental and sensory texture of set style yoghurt" MILCHWISSENSCHAFT, VV GMBH VOLKSWIRTSCHAFTLICHER VERLAG. MUNCHEN, DE, vol. 54, no. 10, 1 January 1999 (1999-01-01), pages 563-566, XP008083032 ISSN: 0026-3788
- LORENZEN P C ET AL: "Impact of enzymatic crosslinking of milk protein on the properties of stirred yoghurt and stirred cultured milk products" KIELER WIRTSCHAFTLICHE FORSCHUNGSBERICHTE, VERLAG TH. MANN, GELSENKIRCHEN, DE, vol. 57, no. 2, 1 January 2005 (2005-01-01), pages 97-115, XP009112258 ISSN: 0023-1347
- BONISCH ET AL: "Transglutaminase cross-linking of milk proteins and impact on yoghurt gel properties" INTERNATIONAL DAIRY JOURNAL, ELSEVIER APPLIED SCIENCE, BARKING, GB LNKD- DOI:10.1016/J.IDAIRYJ.2007.01.019, vol. 17, no. 11, 20 September 2007 (2007-09-20), pages 1360-1371, XP022261754 ISSN: 0958-6946
- TINGTAO CHEN ET AL: "Identification of bacterial strains in Viili by molecular taxonomy and their synergistic effects on milk curd and exopolysaccharides production", AFRICAN JOURNAL OF BIOTECHNOLOGY, vol. 10, no. 74, 2011, - 23 November 2011 (2011-11-23), pages 16969-16975,
- "Yoghurt from Wikipedia", , 2017, Retrieved from the Internet: URL:https://en.wikipedia.org/wiki/yogurt [retrieved on 2017]
- "Viili from Wikipedia", , 2017, Retrieved from the Internet: URL:https://en.wikipedia.org/wiki/viili [retrieved on 2017]
- ADOLFSSON ET AL: "Yogurt and gut function", AM J CLIN NUTR, 2004, pages 245-256,
- JAROS et al.: "Enzymatic modification through microbial transglutaminase enhances the viscosity of stirred 2007 yoghurt", Journal of Texture Studies, vol. 38, 2007, pages 179-198,

## Description

### TECHNICAL FIELD

The present invention relates to the use of transglutaminase in combination with a microorganism which produces an exopolysaccharide (EPS) for decreasing the ropiness of an acidified milk product, wherein said acidified milk product is to be obtained by fermentation of a milk substrate with said microorganism.

### BACKGROUND OF THE INVENTION

The market for acidified milk products, which includes fermented milks, such as spoonable, set-type and liquid (drinkable) yoghurt, is increasing worldwide and there is an interest in improving the quality and economics of this product. Acidified milk products are generally produced by acidification of a milk base, such as a pasteurized fresh milk or a reconstituted milk from milk protein powder and water. Acidification may take place through addition of a chemical, such as glucono delta-lactone (GDL) or lactobionic acid (LBA), or it may be caused by fermentation of the milk with lactic acid bacteria. Optionally, the acidified milk product is mixed with a sugar syrup solution, and/or subjected to a homogenization treatment.
Transglutaminase (TGase or TG) can be used to increase the viscosity and gel stiffness of fermented milk products, such as e.g. yoghurt. Whereas TGase significantly increases the gel firmness of yoghurt, the mouth thickness of the yoghurt tends to become watery and thin.
Lauber S et al. (2000), European Food Research and Technology, vol. 210, no. 5, pages 305-309 teaches the effect of transglutaminase in yoghurts to increase its breaking strength.
Bönisch et al. (2007), Food Hydrocolloids, vol. 21, no. 4, pages 585-595 and Bönisch et al. (2007), International Dairy Journal, vol. 17, no. 11, pages 1360-137 teach the effect of transglutaminase in yoghurts to increase viscosity and firmness.
EP 0 610 549 A1 teaches the use of transglutaminase to prevent syneresis in yoghurts.
Lorenzen P C et al. (2005), Kieler Wirtschaftliche Forschungsberichte, vol. 57, no. 2, pages 97-115 teaches the use of transglutaminase in yoghurts to increase viscosity and reduce syneresis.
EP 2 011 402 A1 teaches the use of transglutaminase to reduce syneresis and increase the rich feel of yoghurts.
WO 2009/010257 A2 teaches the use of transglutaminase in yoghurt drinks.
WO 2007/060288 A1 discloses the use of transglutaminase for the production of the Scandinavian milk product viili.

### SUMMARY OF THE INVENTION

The present inventors have observed that when yoghurt is produced using an exopolysaccharide (EPS) producing lactic acid bacterial culture in combination with TGase, it is possible to produce a yoghurt with high gel stiffness as well as a pleasant high mouth thickness and a pleasant mouth feel.
Surprisingly, it has been found that using a combination of an EPS producing culture (which normally provides a ropy texture to the yoghurt) together with TGase, it is possible to produce a yoghurt with high gel firmness, high mouth thickness and a short texture, rather than the ropy texture normally induced when just using the starter culture.
Thus, the present inventors have surprisingly found that a yoghurt produced with transglutaminase and a polysaccharide producing microorganism has e.g. improved mouth feel and reduced ropiness compared to a yoghurt produced the same way, but without transglutaminase treatment.
Consequently, the present invention relates to the use of transglutaminase in combination with a microorganism which produces an exopolysaccharide (EPS) for decreasing the ropiness of an acidified milk product, wherein said acidified milk product is to be obtained by fermentation of a milk substrate with said microorganism. The acidified milk product can be a yogurt, e.g. a set-type or spoonable yoghurt.

The product may be packaged, e.g. in a sealed container having a volume in the range of 25 to 1500 ml. The acidified milk product is free, or substantially free of stabilizers and thickeners like HM pectin, LM pectin, starch, modified starch, gelatin, CMC, Soya Bean Fiber/Soya Bean Polymer, Alginate. By substantially free should be understood that the product comprise less than 20% (w/w) (e.g. less than 10%, less than 5% or even less than 2% or 1%) stabilizers or thickeners.
The invention relates to the use of transglutaminase in combination with a microorganism which produces an exopolysaccharide (EPS) for decreasing the ropiness of an acidified milk product, such as a yogurt, e.g. a set-type or spoonable yoghurt. Interesting embodiments of this invention are:
- the use of transglutaminase for decreasing the ropiness of an acidified milk product which has been produced using a microorganism which causes a high/ropy texture in the acidified milk product, such as set-type or spoonable yoghurt.

### DETAILED DISCLOSURE OF THE INVENTION

The terms "ropy" or "ropiness" refers to the texture of the yoghurt and/or acidified milk product. E.g., the texture of a yoghurt is assessed by sensory evaluation. A spoonful of yoghurt is pulled from the sample and the ropy property is evaluated. The longer the thread becomes before it breaks the ropier the product. Ropiness can also be assessed instrumentally: Using a rheometer with a bob-cup system a flow curve measuring shear stress as a function of shear rates from 10 to 350 s-1 (up and down sweeps). Hysteresis loop area between the upwards and downwards flow curve (shear rates from 0 to 241 s-1) was calculated in % of the area under the upper curve. The hysteresis loop area is correlated to the sensory perceived ropiness.
The term "short texture" refers to the opposite of ropy texture. So when the ropiness of a yoghurt decreases, the texture becomes "shorter".
The term "acidified milk products" refers to any milk-based product which has been acidified, and includes fermented milk products, and acidified milk drinks.

The term "yoghurt" covers a milk product produced by fermentation by a starter culture of Lactobacillus delbrueckii subsp. bulgaricus and Streptococcus thermophilus wherein the starter culture produces an exopolysaccharide (EPS).

"Acidified milk drinks" include any drinkable product based on acidified milk substrates, thus including fermented milk drinks and liquid yoghurt drinks. Acidified milk drinks are drinkable in the sense that they are in liquid form and consumed as beverages, i.e. they are suitable for drinking instead of being eaten with a spoon ("spoonable"). "In liquid form" means that the products are in the fluid state of matter thus exhibiting a characteristic readiness to flow. Thus, the shape of a liquid is usually determined by the container it fills, in contrary to e.g. a gel-like substance, which is soft, but not free flowing, such as e.g. yoghurt or pudding. Acidified milk drinks according to the invention may have a viscosity allowing the consumer to drink the products using a straw if desired.

In an interesting aspect, acidified milk drinks have a viscosity measured as discharge time from a 10 ml pipette which is substantially the same as the discharge time of an acidified milk drink produced without transglutaminase. In this context, a discharge time which is substantially the same means that it is less than 20% increased, preferably less than 15% increased and more preferably less than 10% increased.

An acidified milk product may have a pH of less than 4.6, preferably less than 4.4, more preferably less than 4.2 and even more preferably about pH 4.0 or less. In one aspect, the acidified milk product has a pH of less than 3.8, such as less than 3.6.

Acidification is performed as a fermentation with a microorganism and/or by addition of an acid, such as an organic acid (e.g. lactic acid, lactobionic acid or GDL). The milk substrate is acidified by fermentation with a microorganism. Optionally, such acidification by fermentation is combined with chemical acidification of the milk substrate, e.g. by addition of an acid as described above.

An acidified milk product may have a fat content of 0 to 2%, preferably below 1.5%, below 1% or below 0.5%, more preferably of about 0.1% or less. The acidified milk product may have a milk solid non-fat content of less than 20%, preferably less than 8.5%, less than 8%, less than 7.5%, less than 7%, less than 6.5% or less than 6%, and more preferably of about 5%.

An acidified milk product may have a protein content of between 0.5 and 4%. In one preferred aspect, the acidified milk product has a protein content of below 1%. In another preferred aspect, the acidified milk product has a protein content of between 2% and 3%.

An acidified milk product may have a shelf life of more than 7 days, preferably more than 14 days, more preferably more than 28 days, such as more than 3 months. By the term "shelf-life" as used herein should be understood the time-period from the finalisation of a product and until this product, when stored properly and under the conditions recommended by the manufacturer, becomes unacceptable to the consumer.
Mouthfeel (or mouth feel) is a product's physical and chemical interaction in the mouth, an aspect of food rheology. It is evaluated from initial perception on the palate, through swallowing to aftertaste. The term describes all tactile observations related with the texture and sensation of texture in the mouth (or sensations occurring in the oral cavity, related to the oral tissues and their perceived condition, e.g. coating), including the characteristic "creaminess" which usually refers to the mouthfeel of cream. (Barnes et al., 1991, Journal of Dairy Science 74:2089-2099, Lawless and Heyman (1999) Sensory evaluation of food: principles and practices. Aspen Publishers, Inc., Gaithersburg, MD).
"Mouth thickness" may be described as the degree of thickness when swallowing the yogurt at normal-high eating rate; high mouth thickness corresponds to a thick product that takes a long time to swallow (Meilgaard, M., Civille, V.G., Carr, B.T., eds. 1999. Sensory Evaluation Techniques (3rd Editition). New York: CRC Press.).
The term "spoonable" should be understood as to be consumed using a spoon. The term "spoonable fermented milk product" includes "stirred yoghurt". The term "stirred yoghurt" specifically refers to a yoghurt product which sustains a mechanical treatment after fermentation, resulting in a softening and liquefaction of the coagulum formed under the fermentation stage. The mechanical treatment is typically but not exclusively obtained by stirring, pumping, filtrating or homogenizing the yoghurt gel, or by mixing it with other ingredients. Stirred yoghurts typically but not exclusively have a milk solid non-fat content of 9 to 15%. The term "set-type fermented milk product" includes a product based on milk which has been inoculated with a starter culture, e.g. a yoghurt starter culture, and packaged next to the inoculating step and then fermented in the package. The term "drinkable fermented milk product" , "acidified milk drink", and "fermented milk drink" includes beverages such as "drinking yoghurt" and similar. The term "drinking yoghurt" typically covers a milk product produced by fermentation by the combination of a Lactobacillus species (e.g. L. bulgaricus) and Streptococcus thermophilus. "Drinking yoghurt" is typically consumed by drinking the yoghurt, e.g. directly from the packaging or from a glass/cup or the like. Drinking yoghurt typically have a milk solid non-fat content of 8% or more. Furthermore, the live culture count for drinking yoghurt drinks is typically at least 10E6 cell forming units (CFU) pr ml. "Milk substrate", in the context of the present invention, may be any raw and/or processed milk material that can be subjected to acidification. Thus, useful milk substrates include, but are not limited to, solutions/suspensions of any milk or milk like products comprising protein, such as whole or low fat milk, skim milk, buttermilk, reconstituted milk powder, condensed milk, dried milk, whey, whey permeate, lactose, mother liquid from crystallization of lactose, whey protein concentrate, or cream. Obviously, the milk substrate may be milk. The term "milk" is to be understood as the lacteal secretion obtained by milking any mammal, such as cows, sheep, goats, buffaloes or camels. In a preferred embodiment, the milk is cow's milk.
In one aspect of the present invention, the milk substrate is more concentrated than raw milk, i.e. the protein content is higher than in raw milk. In this aspect, the protein content is more than 5%, preferably more than 6%, such as more than 7%, more preferably more than 8%, such as more than 9% or more than 10%. Preferably, the lactose content is also higher than in raw milk, such as more than 7%, more than 8%, more than 9%, more than 10%, more than 11% or more than 12%. In a preferred embodiment of this aspect, the milk substrate is a concentrated aqueous solution of skim milk powder having a protein content of more than 5% and a lactose content of more than 7%.
In the context of the present invention, percentages defining the content of the milk substrate or the content of the acidified milk product are mass percentages, i.e. the mass of a substance (e.g. protein or lactose) as a percentage of the mass of the entire solution (milk substrate or acidified milk product). Thus, in a milk substrate having a protein content of more than 5%, the mass of the proteins constitutes more than 5% of the mass of the milk substrate.
Preferably, at least part of the protein in the milk substrate is proteins naturally occurring in milk, such as casein or whey protein. However, part of the protein may be proteins which are not naturally occurring in milk.
The term "hydrolyzate" refers to any substance produced by hydrolysis. The term is not intended to be limited to substance produced by any specific method of hydrolysis. The term is intended to include "hydrolyzates" produced by enzymatic as well as non-enzymatic reactions.

For example, any of the known hydrolytic enzymes (e.g., proteases, serine proteases, metalloproteases, hydrolases, etc.) are capable of producing hydrolyzates within the meaning of how the term is used in the present context. Similarly, non-enzymatic methods of hydrolysis (e.g., acid/base hydrolysis, etc.) also produce hydrolyzates within the meaning of how the term is used in the present application. The term "protein hydrolyzate" refers to a hydrolyzate produced by hydrolysis of a protein of any type or class. Any known protein may be hydrolyzed to produce a protein hydrolyzate within the meaning of the term. A "protein hydrolyzate" may be produced by enzymatic as well as non-enzymatic methods and may include protein fragments (e.g., polypeptides) that range in size from two to 100 or more amino acids. Further, as used herein, a "protein hydrolyzate" is not limited to a single product compound, but may include a heterogenous distribution or mixture of hydrolysis products (e.g., protein fragments). It may also include a homogenous compound or purified fraction of hydrolysis products. The term "protein" refers to any composition comprised of amino acids and recognized as a protein by those of skill in the art. The terms "protein," "peptide" and "polypeptide" are used interchangeably herein. The term "milk protein hydrolyzate" refers to a hydrolyzate produced by hydrolysis of a milk protein of any type or class, e.g. a casein or a whey protein.

Proteases useable in the present invention is in particular proteases from the IUBMB Enzyme Nomenclature class EC 3.4.-.-, especially from subclasses EC 3.4.21.-, EC 3.4.22.-, EC 3.4.23.- and EC 3.4.24.-. The classes comprises serine proteases, Bacillus proteases, Cysteine proteases, Aspartic proteases, metalloproteases, proteases classified in EC 3.4.21.62, EC 3.4.22.2, EC 3.4.23.4, EC 3.4.24.28, Neutrase ^{®}, Alcalase ^{®}, subtilisin A (Type VIII), papain, chymosin, Colorase N, Optimase or Protease N "Amano". The protease may be used in purified form, e.g. isolated from a microorganism, such as a protease originating from a lactic acid bacterium, or it may be produced in situ by a microorganism, such as the lactic acid bacterium used for the fermentation.

Prior to fermentation, the milk substrate may be homogenized and pasteurized according to methods known in the art.

"Homogenizing" as used herein means intensive mixing to obtain a soluble suspension or emulsion. If homogenization is performed prior to fermentation, it may be performed so as to break up the milk fat into smaller sizes so that it no longer separates from the milk. This may be accomplished by forcing the milk at high pressure through small orifices.

"Pasteurizing" as used herein means treatment of the milk substrate to reduce or eliminate the presence of live organisms, such as microorganisms. Preferably, pasteurization is attained by maintaining a specified temperature for a specified period of time. The specified temperature is usually attained by heating. The temperature and duration may be selected in order to kill or inactivate certain bacteria, such as harmful bacteria. A rapid cooling step may follow.

"Fermentation" means the conversion of carbohydrates into alcohols or acids through the action of a microorganism. Preferably, fermentation comprises conversion of lactose to lactic acid.

"Microorganism" may include any bacterium or fungus being able to ferment the milk substrate. The microorganisms used for most fermented milk products are selected from the group of bacteria generally referred to as lactic acid bacteria. As used herein, the term "lactic acid bacterium" designates a gram-positive, microaerophilic or anaerobic bacterium, which ferments sugars with the production of acids including lactic acid as the predominantly produced acid, acetic acid and propionic acid. The industrially most useful lactic acid bacteria are found within the order "Lactobacillales" which includes *Lactococcus* spp., *Streptococcus* spp., *Lactobacillus* spp., *Leuconostoc* spp., *Pseudoleuconostoc* spp., *Pediococcus* spp., *Brevibacterium* spp., *Enterococcus* spp. and *Propionibacterium* spp. Additionally, lactic acid producing bacteria belonging to the group of the strict anaerobic bacteria, bifidobacteria, i.e. *Bifidobacterium* spp., are generally included in the group of lactic acid bacteria. These are frequently used as food cultures alone or in combination with other lactic acid bacteria, Lactic acid bacteria are normally supplied to the dairy industry either as frozen or freeze-dried cultures for bulk starter propagation or as so-called "Direct Vat Set" (DVS) cultures, intended for direct inoculation into a fermentation vessel or vat for the production of a dairy product, such as an acidified milk product. Such cultures are in general referred to as "starter cultures" or "starters".
Commonly used starter culture strains of lactic acid bacteria are generally divided into mesophilic organisms having optimum growth temperatures at about 30°C and thermophilic organisms having optimum growth temperatures in the range of about 40 to about 45°C. Typical organisms belonging to the mesophilic group include *Lactococcus lactis, Lactococcus lactis* subsp. *cremoris, Leuconostoc mesenteroides* subsp. *cremoris, Pseudoleuconostoc mesenteroides* subsp. *cremoris, Pediococcus pentosaceus, Lactococcus lactis* subsp. *lactis biovar. diacetylactis, Lactobacillus casei* subsp. *casei* and *Lactobacillus paracasei* subsp. *paracasei.* Thermophilic lactic acid bacterial species include as examples *Streptococcus thermophilus, Enterococcus faecium, Lactobacillus delbrueckii* subsp. *lactis, Lactobacillus helveticus, Lactobacillus delbrueckii* subsp. *bulgaricus* and *Lactobacillus acidophilus.*
Also the strict anaerobic bacteria belonging to the genus *Bifidobacterium* including *Bifidobacterium bifidum* and *Bifidobacterium longum* are commonly used as dairy starter cultures and are generally included in the group of lactic acid bacteria. Additionally, species of *Propionibacteria* are used as dairy starter cultures, in particular in the manufacture of cheese. Additionally, organisms belonging to the *Brevibacterium* genus are commonly used as food starter cultures.

Another group of microbial starter cultures are fungal cultures, including yeast cultures and cultures of filamentous fungi, which are particularly used in the manufacture of certain types of cheese and beverage. Examples of fungi include *Penicillium roqueforti, Penicillium candidum, Geotrichum candidum, Torula kefir, Saccharomyces kefir and Saccharomyces cerevisiae.*

In the present invention, the microorganism used for fermentation of the milk substrate is a mixture of *Streptococcus thermophilus* and *Lactobacillus delbrueckii* subsp. *bulgaricus.*
Optionally, the fermented milk substrate may be subjected to heat treatment to inactivate the microorganism.
Fermentation processes to be used in production of acidified milk products are well known and the person of skill in the art will know how to select suitable process conditions, such as temperature, oxygen, amount and characteristics of microorganism(s) and process time. Obviously, fermentation conditions are selected so as to support the achievement of the present invention, i.e. to obtain a fermented milk product suitable in the production of an acidified milk drink.
Likewise, the skilled person will know if and when additives such as, e.g., carbohydrates, flavors, minerals, enzymes (e.g. rennet, lactase and/or phospholipase) are to be used in production of yoghurt according to the invention.
Optionally, the fermented milk substrate may be diluted to obtain the acidified milk drink. In one embodiment, the fermented milk substrate is diluted at least 1.5 times, preferably at least 2 times, at least 2.5 times or at least 3 times. It may be diluted with water or an aqueous solution of any kind. "Diluted at least 1.5 times" in the context of the present invention means that the fermented milk substrate is diluted so that its volume is increased by at least 50%.
In one embodiment, a syrup is added to the fermented milk substrate. "Syrup" in the context of the present invention is any additional additive ingredient giving flavor and/or sweetness to the final product, i.e. the yoghurt. It may be a solution comprising, e.g., sugar, sucrose, glucose, liquid sugar of fructose, aspartame, sugar alcohol, fruit concentrate, orange juice, strawberry juice and/or lemon juice. The mixture of the fermented milk substrate and the syrup may be homogenized using any method known in the art. The homogenization may be performed so as to obtain a liquid homogenous solution which is smooth and stable. Homogenization of the mixture of the acidified milk substrate and the syrup may be performed by any method known in the art, such as by forcing the milk at high pressure through small orifices.

In another aspect, water is added to the fermented milk substrate, and the mixture of fermented milk substrate and water is homogenized.

The present invention uses an enzyme having transglutaminase activity, in combination with a microorganism that produces EPS, for treating a milk substrate. The enzyme treatment may be performed prior to fermentation, such as before inoculation with the microorganism. The enzyme treatment may be performed at the same time as the fermentation. In one embodiment, the enzyme is added before, at the same time or after inoculation of the milk substrate with a microorganism, and the enzyme reaction on the milk substrate takes place at essentially the same time as it is being fermented. Alternatively, the enzyme treatment may be performed after fermentation. If the acidified milk substrate is mixed and optionally homogenized with the syrup, the enzyme treatment may be performed before or after this. The enzyme may be added at the same time or after the syrup, but before homogenization, or it may be added after the acidified milk substrate and the syrup have been mixed and homogenized.

In a preferred embodiment, enzyme treatment is performed before or during fermentation. In a more preferred embodiment, the milk substrate is subjected to pasteurization prior to fermentation, and the enzyme treatment is performed before pasteurization. The pasteurization may thus inactivate the enzyme.

In another preferred embodiment, the milk substrate is subjected to heat treatment, such as pasteurization, prior to treatment with transglutaminase. The heat treatment may be performed so that more than 50%, preferably more than 60%, more than 70% or more than 80%, of the whey protein in the milk substrate is denatured. In the context of the present invention, whey protein is denatured when it sediments at pH 4.5. In a more preferred embodiment, the milk substrate is subjected to heat treatment followed by homogenisation prior to treatment with transglutaminase. Optionally, the fermented milk substrate may be subjected to heat treatment, such as pasteurization, to inactivate the microorganism. Another heat treatment may be performed after the enzyme treatment so as to inactivate the enzyme.

In another preferred embodiment, yeast extract or a reducing agent such as glutathione is added to the milk substrate prior to treatment with transglutaminase.

Another heat treatment, such as a pasteurization, may be performed after the enzyme treatment so as to inactivate the enzyme.

The enzyme having transglutaminase activity is added in a suitable amount to achieve the desired degree of protein modification under the chosen reaction conditions. The enzyme may be added at a concentration of between 0.0001 and 1 g/L milk substrate, preferably between 0.001 and 0.1 g/L milk substrate. Dosing in units, the enzyme may be added at a concentration of between 0.5 TGHU (TransGlutaminase Hydroxamate Units) and 20 TGHU TGase/g protein in the milk substrate, preferably between 2 and 10 TGHU TGase/g protein in the milk substrate.

In another preferred embodiment, yeast extract or a reducing agent such as glutathione is added to the milk substrate prior to treatment with transglutaminase.

The enzymatic treatment may be conducted by adding the enzyme to the milk substrate and allowing the enzyme reaction to take place at an appropriate holding-time at an appropriate temperature. The enzyme treatment may be carried out at conditions chosen to suit the selected protein modifying enzyme according to principles well known in the art. The treatment may also be conducted by contacting the milk substrate with an enzyme that has been immobilized.

The enzyme treatment may be conducted at any suitable pH, such as, e.g., in the range of pH 2-10, such as, at a pH of 4-9 or 5-7. It may be preferred to let the enzyme act at the natural pH of the milk substrate, or, if acidification is obtained because of fermentation, the enzyme may act at the natural pH of the milk substrate during the fermentation process, i.e. the pH will gradually decrease from the natural pH of the unfermented milk substrate to the pH of the fermented milk substrate.

The enzyme treatment may be conducted at any appropriate temperature, e.g. in the range 1-80°C, such as 2-70°C. In one embodiment of the present invention, the enzyme treatment may preferably be conducted at a temperature in the range 40-50°C. In another embodiment, the enzyme treatment may preferably be conducted at a temperature of below 10°C.

Optionally, after the enzyme has been allowed to act on the milk substrate, the enzyme protein may be removed, reduced, and/or inactivated by any method known in the art, such as by heat treatment and/or reduction of pH.

Optionally, other ingredients may be added to the acidified milk product, such as color; stabilizers, e.g. pectin, starch, modified starch, CMC, etc.; or polyunsaturated fatty acids, e.g. omega-3 fatty acids. Such ingredients may be added at any point during the production process, i.e. before or after fermentation, before or after enzyme treatment, and before or after the optional addition of syrup.

In the context of the present invention, an enzyme having transglutaminase activity may be an enzyme which catalyzes the acyl transfer between the gamma-carboxylamide group of peptide-bound glutamine (acyl donor) and primary amines (acyl acceptor), e.g. peptide-bound lysine. Free acid amides and amino acids also react. Proteins and peptides may thus be cross linked in this way. Transglutaminase may also, e.g. if amines are absent, catalyze the deamination of glutamine residues in proteins with H₂O as the acyl acceptor.

A transglutaminase may also be referred to as, e.g., protein glutamine-gamma-glutamyl transferase, Factor XIIIa, fibrinoligase, fibrin stabilizing factor, glutaminylpeptide gamma-glutamyltransferase, polyamine transglutaminase, tissue transglutaminase, or R-glutaminylpeptide:amine gamma-glutamyl transferase. The group of transglutaminases comprises but is not limited to the enzymes assigned to subclass EC 2.3.2.13. In the context of the present invention, transglutaminase may also be referred to as TGase or TG.

A transglutaminase to be used according to the invention is preferably purified. The term "purified" as used herein covers enzyme protein preparations where the preparation has been enriched for the enzyme protein in question. Such enrichment could for instance be: the removal of the cells of the organism from which an enzyme protein was produced, the removal of non-protein material by a protein specific precipitation or the use of a chromatographic procedure where the enzyme protein in question is selectively adsorbed and eluted from a chromatographic matrix. The transglutaminase may have been purified to an extent so that only minor amounts of other proteins are present. The expression "other proteins" relate in particular to other enzymes. A transglutaminase to be used according to the invention may be "substantially pure", i.e. substantially free from other components from the organism in which it was produced, which may either be a naturally occurring microorganism or a genetically modified host microorganism for recombinant production of the transglutaminase. However, for the uses according to the invention, the transglutaminase need not be that pure. It may, e.g., include other enzymes.

In a preferred aspect, the transglutaminase to be used according to the invention has been purified to contain at least 20%, preferably at least 30%, at least 40% or at least 50%, (w/w) of transglutaminase out of total protein. The amount of transglutaminase may be calculated from an activity measurement of the preparation divided by the specific activity of the transglutaminase (activity/mg EP), or it may be quantified by SDS-PAGE or any other method known in the art. The amount of total protein may, e.g., be measured by amino acid analysis.

In one embodiment, the enzyme having transglutaminase activity is recombinantly produced.

In other embodiments of the present invention, the enzyme having transglutaminase activity may be of animal, of plant or of microbial origin. Preferred enzymes are obtained from microbial sources, in particular from a filamentous fungus or yeast, or from a bacterium. For purposes of the present invention, the term "obtained from" as used herein in connection with a given source shall mean that the enzyme originates from the source. The enzyme may be produced from the source or from a strain in which the nucleotide sequence encoding the enzyme has been inserted, i.e. a recombinant strain. In a preferred embodiment, the polypeptide obtained from a given source is secreted extracellularly.

The enzyme may, e.g., be obtained from a strain of *Agaricus,* e.g. *A. bisporus*; *Ascovaginospora; Aspergillus,* e.g. *A. niger, A. awamori, A. foetidus, A. japonicus, A. oryzae; Chaetomium; Chaetotomastia; Dictyostelium,* e.g. *D. discoideum; Mucor,* e.g. *M. javanicus, M. mucedo, M. subtilissimus; Neurospora,* e.g. *N. crassa; Rhizomucor,* e.g. *R*. *pusillus; Rhizopus,* e.g. *R. arrhizus, R. japonicus, R. stolonifer; Sclerotinia,* e.g. *S. libertiana; Trichophyton,* e.g. *T. rubrum; Whetzelinia,* e.g. *W. sclerotiorum; Bacillus,* e.g. *B. megaterium, B. subtilis, B. pumilus, B. stearothermophilus, B. thuringiensis; Chryseobacterium; Citrobacter,* e.g. *C. freundii; Enterobacter,* e.g. *E. aerogenes, E. cloacae Edwardsiella, E. tarda; Erwinia,* e.g. *E. herbicola; Escherichia,* e.g. *E. coli; Klebsiella,* e.g. *K. pneumoniae; Miriococcum; Myrothesium; Mucor; Neurospora,* e.g. *N. crassa; Phytophthora,* e.g. *P. cactorum; Proteus,* e.g. *P. vulgaris; Providencia,* e.g. *P. stuartii; Pycnoporus,* e.g. *Pycnoporus cinnabarinus, Pycnoporus sanguineus; Salmonella,* e.g. *S. typhimurium; Serratia,* e.g. *S. liquefasciens, S. marcescens; Shigella,* e.g. *S. flexneri; Streptomyces,* e.g. *S. antibioticus, S. castaneoglobisporus, S. lydicus, S. mobaraensis, S. violeceoruber; Streptoverticilium,* e.g. *S. mobaraensis; Trametes; Trichoderma,* e.g. *T. reesei, T. viride; Yersinia,* e.g. *Y. enterocolitica.*
In a preferred embodiment, the enzyme is a transglutaminase obtained from a bacterium, e.g. an Actinobacterium from the class Actinobacteria, such as from the subclass Actinobacteridae, such as from the order Actinomycetales, such as from the suborder Streptomycineae, such as from the family Streptomycetaceae, such as from a strain of *Streptomyces,* such as *S. lydicus or S. mobaraensis.* In another embodiment, the enzyme is a transglutaminase obtained from a fungus, e.g. from the class *Oomycetes,* such as from the order *Peronosporales,* such as from the family *Pythiaceae,* such as from the genera *Pythium* or *Phytophthora,* such as from a strain of *Phytophthora cactorum.*
According to the present invention, transglutaminase activity may be determined by any method known in the art, such as by incubating the enzyme with gamma-carboxamid group of protein- or peptide-bound glutamine and an amine group, e.g. protein- or peptide-bound lysine, in a buffer at various pH and temperatures, e.g. 50 mM MES at pH 6.5 at 37°C for 30 minutes. The detection of enzyme activity can be followed by the release of ammonia (e.g. kit obtained from Roche NH3-11877984) or using hydroxylamine as amine group donor (the amount of Glutamic acid gamma-hydroxamate formed in the reaction is detected as a red complex with ferric ions under acid conditions measured at 510 nm) or by determination of the epsilon-(gamma-glutamyl)lysin by amino acid analysis.

### REFERENCES

WO09016257A (Novozymes); US2009061046A (NovoZymes); WO9421129A (Novozymes); WO2007/060288A, WO05016027A; WO0110232A; EP0671885; US4289789 Food Control, Volume 16, Issue 3, March 2005, Pages 205-209 Journal of Dairy Science, Vol. 85, No. 7, 1705-1708 Journal of Dairy Research (2008) 75 450-456 International Dairy Journal, Volume 16, Issue 2, February 2006, Pages 111-118 All references cited in this patent document are hereby incorporated herein in their entirety by reference.

### DRAWING

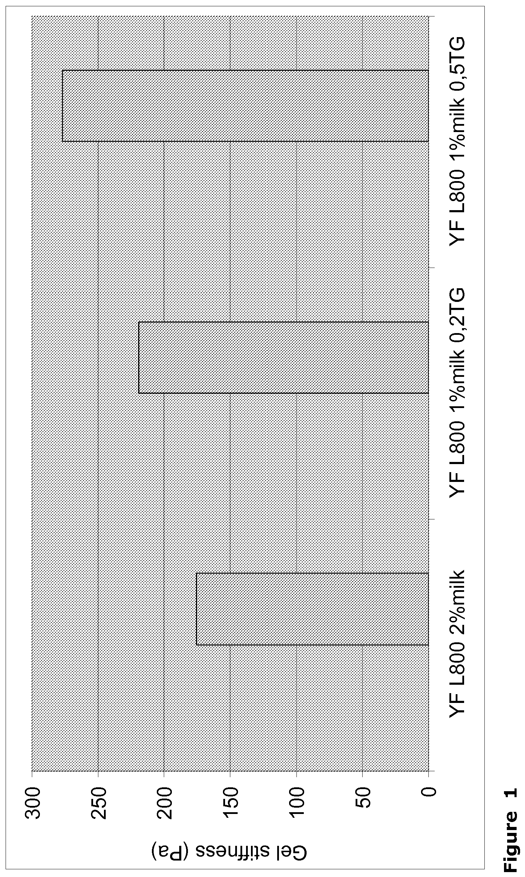

Figure 1 depicts the gel stiffness as a function of TGase dosage, see the example.

### EXAMPLE

Yoghurt was made from 3 X 200 mL whole milk:
Sample 1: Whole milk added 2% of Skim milk powder (SMP)
Sample 2: Whole milk added 1% of SMP and 0.2 Units TGase per gram of substrate protein (U/g).
Sample 3: Whole milk added 1% of SMP and 0.5 U/g TGase.

In all cases fresh whole milk from Aria Foods (Aria Ekspress, "Sødmælk") was used. The milk was added skim milk powder and allowed to hydrate overnight at 5C. Then the milk was heat treated at 90C for 20 min and cooled to the fermentation temperature of 43C. After cooling to 43C, the necessary amount of TGase (Ajinomoto Activa YG) was added to the milk. Hereafter the culture (YL-F800, Chr. Hansen A/S) was added and the milk was incubated at 43C until reaching a pH of 4.7. Then the sample was cooled at 5C and stored until measurement. One the next day the rheological properties of the yoghurt were measured using a StressTech rheometer. Measurements were done at 13C. In one test the gel stiffness of the yoghurt was measured by a so-called frequency sweep, measuring the complex modulus (G*) of the gel as function of oscillation frequency. The value of G* at 1 Hz was used a the "gel stiffness" of the yoghurt. The viscosity of the yoghurt was measured by a so-called constant rate measurement, measuring the shear stress of the yoghurt as function of shear rate. The shear stress at a rate of 300 s⁻¹ has previously been found to correlate well with sensory perceived "Mouth thickness", and thus this value was used to evaluate "mouth thickness" of the yoghurts. The area that is formed between the shear stress curve, when increasing shear rate and decreasing it again it often referred to as the "hysteresis loop". It has previously been found that the ratio of the "hysteresis loop" area divided by the shear stress at 300 s⁻¹ is a measure of the ropiness of the yoghurt, and thus this value (the ratio) was used to describe ropiness of the yoghurts.

Figure 1 clearly shows that when TGase is added to the yoghurt, even when replacing 1% SMP, the gel stiffness of the yoghurt is significantly improved (as a function of TGase dosage).

The table below (Table 1) shows the shear stress at 300 s-1 ("Mouth thickness") and the ropiness (as measured as described). It is clear that the "mouth thickness" of the yoghurt increases, whereas the ropiness decreases. This shows that TGase together with an EPS producing culture can produce a yoghurt with high gel stiffness, high "mouth thickness" and a shorter texture, than anticipated from using the EPS producing culture without TGase.

**Table 1**

| **Sample** | **Shear stress at 300 s^{- 1}(Pa)** | **Hysteresis Loop area (- )** | **Ratio of Loop area: Upper shear stress (-)** |
|---|---|---|---|
| YF-L800 (2% added SMP) | 100.50 | 11835.73 | 0.44 |
| YF-L800 (1% added SMP + 0,2 U/g TG) | 105.97 | 12416.99 | 0.43 |
| YF-L800 (1% added SMP + 0,5 U/g TG) | 124.43 | 11611.65 | 0.36 |

## Claims

1. Use of transglutaminase in combination with a microorganism which produces an exopolysaccharide (EPS) for decreasing the ropiness of an acidified milk product, wherein said acidified milk product is to be obtained by fermentation of a milk substrate with said microorganism.

2. The use of claim 1, wherein said acidified milk product is a yoghurt.

3. The use of claim 2, wherein said yoghurt is a set-type or spoonable yoghurt.

## Patentansprüche

1. Verwendung von Transglutaminase in Kombination mit einem Mikroorganismus, der ein Exopolysaccharid (EPS) erzeugt, zur Verringerung der Fadenbildung (ropiness) eines gesäuerten Milchprodukts, wobei das gesäuerte Milchprodukt durch Fermentierung eines Milchsubstrats mit dem Mikroorganismus zu erhalten ist.

2. Verwendung nach Anspruch 1, wobei das gesäuerte Milchprodukt ein Joghurt ist.

3. Verwendung nach Anspruch 2, wobei der Joghurt ein löffelbarer Joghurt ist.

## Revendications

1. Utilisation de transglutaminase en association avec un micro-organisme qui produit un exopolysaccharide (EPS) pour diminuer le caractère filandreux d'un produit laitier acidifié, dans laquelle ledit produit laitier acidifié doit être obtenu par fermentation d'un substrat laitier avec ledit micro-organisme.

2. Utilisation selon la revendication 1, dans laquelle ledit produit laitier acidifié est un yaourt.

3. Utilisation selon la revendication 2, dans laquelle ledit yaourt est un yaourt ferme ou pouvant être consommé à la cuillère.
